# EUROPEAN PATENT SPECIFICATION

(11) **EP 0 364 419 B1**
(45) Date of publication and mention of the grant of the patent: **26.05.1993**
(21) Application number: 89850311.5
(22) Date of filing: 22.09.1989
(51) Int. Cl.: H02G 3/22, H02G 9/00

(54) **Cable entry**
Kabeleinführung
Entrée de câble

(30) Priority: 10.10.1988 SE 8803579
(43) Date of publication of application: 18.04.1990
(73) Proprietor: ITT Flygt Aktiebolag, S-171 25 Solna (SE)
(72) Inventor: Lindroos, Helge, S-175 70 Järfälla (SE)
(74) Representative: Larsson, Sten

(56) References cited:
- SE-C- 169 859

## Description

Subject invention concerns a cable entry for connection of an electric power cable to a submersible machine such as an electrically driven pump or a turbine generator.

Submersible machines of the above mentioned type comprise a sealed motor or a generator to which electric power is fed, alternatively is taken out, via a cable. As no liquid is allowed to enter the machine there are great demands on the cable entry, expecially as the cable is often subject to repeated bendings and stretchings within the area of the entry. As the stretch load in the cable may be significant, the grip around the cable must be firm, however, without causing damages because of squeezing.

The sealing and the hold of the cable has normally up to now been carried out by help of a socket of an elastic material such as rubber and a metallic clamping device. An example of such a design is shown in the Swedish Patent No 326 234.

A main disadvantage with this design is primarily that the clamping device does not apply a symmetric squeeze over the cable which means risks for damages on the cable.

Another way to obtain a completely water tight cable entry is to embed the electric conductors in a filling of an insulating material. An example of such a solution is shown in DE-U-82187630. This design obtains a good sealing but is relatively expensive and above all, it is very difficult to obtain out in the field if a repair is needed.

The purpose of this invention is to solve the problems mentioned above by designing a cable entry which meets the requirements for sealing as well as for clamping.

More precisely the invention is concerned with a device for securing and sealing a cable entry as defined in claim 1 and in the appended claims.

The invention is dislosed below with reference to the enclosed drawing.

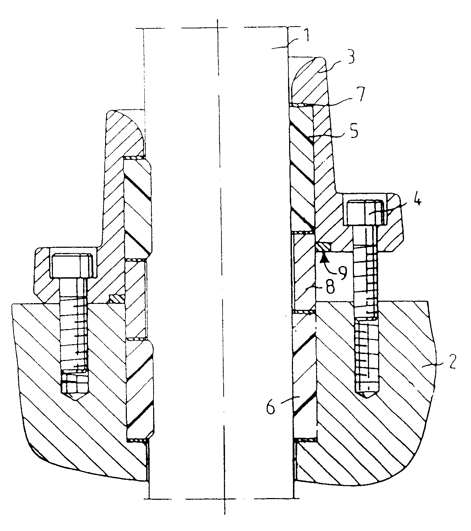

In the drawing 1 stands for a cable, 2 a wall or a shell around an electric motor or the like, 3 a cable collar, 4 screws, 5 and 6 elastic sockets, 7 pressure discs, 8 an intermediate ring a 9 an O-ring.

The wall or the shell 2 and the collar 3 are provided with enlarged holes for the cable 1, said holes having diameters considerably bigger than that of the cable. When mounting the cable, the elastic sockets 5 and 6 are positioned whithin said enlarged holes, one in the shell and one in the collar 3. The outer diamters of said sockets correspond with the diameters of the enlarges holes in the shell and the collar, while the inner diameters of said sockets 5 and 6 somewhat exceed the diamter of the cable. Between the sockets 5 and 6 a ring of a rigid material, having an outer diamter somewhat smaller than that of the sockets, is arranged. After that, the cable is brought in through the sockets.

The lengths of the sockets 5 and 6 and the ring 8 as well as the lengths of the enlarged holes in the shell 2 and the collar 3 are so dimensioned, that the collar will take a position at a certain distance from the shell 2 at the initial step of the mounting, when the sockets 5 and 6 take their initial, rest, positions.

When the cable 1 has been brought sufficiantly into the machine, screws 4 are put into holes in the collar 3 and are screwed into holes in the shell 2. The collar is then pressed towards the shell and the screws are so fastened, that the collar finally will come into contact with the shell.

Because of the movement of the collar, the sockets 5 and 6 will be compressed axially and expanded radially. In this way they will obtain a grip around the cable and fix and seal it in the shell as well as in the collar. By choosing the lengths of the sockets and the holes, a suitably firm grip around the cable will be obtained when the collar has reached its final position in contact with the shell.

The ring 8 of a non-elastic material is necessary to prevent the sockets from expanding into the partition betwen the shell and the collar during mounting.

In the partition there is arranged an O-ring seal 9, which effectively prevents any leakage between the sockets in case any of them should be damaged.

Pressue discs 7 are arranged between the end surfaces of the sockets 5, 6 and the ringformed surfaces forming the transitions from the enlarged holes in the shell 2 and the collar 3 resp. These discs 7, as well as the sockets 5, 6, are available in different dimensions, which means that the same parts 2 and 3 may be used for several different cable diameters.

According to the invention a lot of advantages are obtained as compared with earlier used devices for sealing and clamping of cable entries. The grip around the cable is symmetric, which means that the risk for damaging the cable is considerably decreased. The grip can be exactly predetermined by dimensioning of the sockets etc as the collar is always fastened tight to the shell. In the known cable entries the torque is depending on the man mounting the device which means risk for too tight as well as too soft grips. The two separate sockets 5 and 6 mean double security which gives a sufficient sealing and clamping, even if one of them should be damaged. Finally the invention means a considerable cost reduction as several cable dimensions may be mounted only by changing the non-expensive sockets 5, 6 and pressure discs 7.

## Claims

1. A device for securing and sealing of a cable entry in a submersible machine, such as an electrically driven pump, a turbine etc, the machine being surrounded by a water tight shell and the cable, adjacent the shell, being surrounded by a collar of a rigid material, which collar is secured to the shell by screws, characterized in that the clamping/sealing comprises two sockets (5) and (6) of an elastic material surrounding the cable (1), one of them mounted in the shell (2) and the other in the collar (3) and a ring (8) of a rigid material arranged between the two sockets, the collar (3) during mounting being moved towards and into contact with the shell (2), thereby causing the sockets (5) and (6) to be compressed axially and expanded radially so that the cable (1) is secured and sealed.

2. A device according to claim 1, characterized in that the ring (8) is arranged in front of the partition between the shell (2) and the collar (3).

3. A device according to claim 1, characterized in that the sockets (5) and (6) in their rest positions have inner diameters which are somewhat bigger than the diameter of the cable (1).

4. A device according to claim 3, characterized in that the sockets (5) and (6) when compressed, have inner diameters, which are smaller than the nominal diameter of the cable (1).

5. A device according to claim 1, characterized in that an o-ring (9) is arranged in the partition between the collar (3) and the shell (2).

6. A device according to claim 2, characterized in that pressure discs (7) are arranged between the sockets (5), (6) and their contact surfaces in the shell (2) and collar (3) resp.

## Patentansprüche

1. Vorrichtung zum Befestigen und Abdichten einer Kabeleinführung in einer tauchbaren Maschine, wie zum Beispiel einer elektrisch betriebenen Pumpe, einer Turbine usw., wobei die Maschine von eiem wasserdichten Mantel umgeben ist und das Kabel angrenzend an den Mantel von einem Kragen aus einem starren Material umgeben ist, wobei der Kragen an dem Mantel durch Schrauben befestigt ist,
dadurch gekennzeichnet, daß die Klemm-/Abdichteinrichtung zwei das Kabel (1) umschließende Hülsen (5) und (6) aus einem elastischen Material umfaßt, von denen die eine in dem Mantel (2) und die andere in dem Kragen (3) angebracht ist und ein Ring (8) aus einem starren Material zwischen den beiden Hülsen angeordnet ist, wobei der Kragen (3) während der Montage auf den Mantel (2) zu und mit diesem in Berührung bewegt wird und dadurch eine axiale Kompression und radiale Expansion der Hülsen (5) und (6) verursacht wird, so daß das Kabel (1) befestigt und abgedichtet ist.

2. Vorrichtung nach Anspruch 1,
dadurch gekennzeichnet, daß der Ring (8) vor der Trennfläche zwischen dem Mantel (2) und dem Kragen (3) angeordnet ist.

3. Vorrichtung nach Anspruch 1,
dadurch gekennzeichnet, daß die Hülsen (5) und (6) in ihren Ruhepositionen Innendurchmesser aufweisen, die etwas größer als der Durchmesser des Kabels (1) sind.

4. Vorrichtung nach Anspruch 3,
dadurch gekennzeichnet, daß die Hülsen (5) und (6) im zusammengedrückten Zustand Innendurchmesser aufweisen, die kleiner als der Nenndurchmesser des Kabels (1) sind.

5. Vorrichtung nach Anspruch 1,
dadurch gekennzeichnet, daß ein O-Ring (9) in der Trennfläche zwischen dem Kragen (3) und dem Mantel (2) angeordnet ist.

6. Vorrichtung nach Anspruch 2,
dadurch gekennzeichnet, daß Druckscheiben (7) zwischen den Hülsen (5), (6) und deren Kontakflächen in dem Mantel (2) bzw. dem Kragen (3) angeordnet sind.

## Revendications

1. Un dispositif pour fixer et rendre étanche une entrée de câble dans une machine immergeable, telle qu'une pompe électrique, une turbine, etc ..., la machine étant entourée par une enveloppe étanche à l'eau et le câble, au voisinage de l'enveloppe, étant entouré par un collier en matériau rigide, lequel collier est fixé à l'enveloppe par des vis, caractérisé en ce que le dispositif de fixation et d'étanchéité comprend deux douilles (5) et (6) en un matériau élastique entourant le câble (1), l'une d'entre elles étant montée dans l'enveloppe (2) et l'autre dans le collier (3) et une bague (8) en matériau rigide disposée entre les deux douilles, le boîtier (3) lors du montage étant déplacé en direction de et amené en contact avec l'enveloppe (2), provoquant ainsi la compression axiale et la dilatation radiale des douilles (5) et (6), de sorte que le câble (1) est fixé de façon étanche.

2. Un dispositif suivant la revendication 1, caractérisé en ce que la bague (8) est disposée en face de la séparation entre l'enveloppe (2) et le collier (3).

3. Un dispositif suivant la revendication 1, caractérisé en ce que les douilles (5) et (6) ont dans leurs positions de repos des diamètres internes qui sont légèrement supérieurs au diamètre du câble (1).

4. Un dispositif suivant la revendication 3, caractérisé en ce que les douilles (5) et (6) lorsqu'elles sont comprimées, ont des diamètres internes qui sont inférieurs au diamètre nominal du câble (1).

5. Dispositif suivant la revendication 1, caractérisé en ce qu'une bague torique (9) est disposée à la séparation entre le collier (3) et l'enveloppe (2).

6. Un dispositif suivant la revendication 2, caractérisé en ce que des disques de pression (7) sont disposés entre les douilles (5), (6) et les surfaces de l'enveloppe (2) et du collier (3), respectivement, avec lesquelles elles sont sont en contact.
